(19)

Europäisches
Patentamt
European
Patent Office
Office européen
des brevets

(11) **EP 2 333 674 A1**

(12) **EUROPEAN PATENT APPLICATION**

(43) Date of publication:
**15.06.2011 Bulletin 2011/24**

(51) Int Cl.:
**G06F 15/78** (2006.01)    **G06F 7/575** (2006.01)

(21) Application number: **09179109.5**

(22) Date of filing: **14.12.2009**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(71) Applicant: **Panasonic Corporation**
**Kadoma-shi**
**Osaka 571-0051 (JP)**

(72) Inventors:
• **Deeley, Simon**
**Bristol, Bristol BS1 6EA (GB)**

• **Stansfield, Tony**
**Bristol, Bristol BS1 6EA (GB)**
• **Ratigner, Herve**
**Bristol, Bristol BS1 6EA (GB)**

(74) Representative: **Haley, Stephen**
**Gill Jennings & Every LLP**
**The Broadgate Tower**
**20 Primrose Street**
**London EC2A 2ES (GB)**

(54) **Alu with efficient saturated arithmetic support**

(57)    A configurable arithmetic processing unit (20) having at least two multi-bit inputs (A, B), at least one multi-bit output (F), a carry input ($C_{IN}$), a carry output ($C_{OUT}$) and a dynamic instruction signal input ($I_{DYNAMIC}$). The configurable arithmetic processing unit further comprises a plurality of functional circuits (Function X, Function Y, Function Z), each having at least one multi-bit input, a multi-bit output and a carry output. The configurable arithmetic processing unit further comprises a first switching means (21) for switching between the carry outputs of the plurality of functional circuits and a second switching means (22) for switching between the multi-bit outputs of the plurality of functional circuits, wherein the second switching means is arranged to be independently operable from the first switching means.

FIGURE 3

EP 2 333 674 A1

## Description

The present invention relates to an Arithmetic Logic Unit (ALU) which can efficiently support saturated arithmetic operations.

ALUs are digital circuits that perform arithmetic and logic functions, and are a building blocks of more complex circuits, such as microprocessors and central processing units (CPU). ALUs are also used in reconfigurable devices, such as those described in, for example, US6353841, US6252792 and US2002/0157066.

ALUs can perform integer arithmetic operations (e.g. addition and subtraction), bit-wise logic operations (e.g. AND, OR, NOT) and bit-shifting operations, such as those used in multiplication and division.

When numbers are represented in a circuit such as an ALU, they are represented with limited range and precision because only a preset number of binary bits will be used to represent the number. This number of bits may be termed the "width" of the number. When used in reconfigurable devices, operations on data which is wider than a single ALU (e.g. 4-bits) are implemented by coupling ALUs in a unidirectional carry-chain formation. This however limits the kinds of operations which can be built to those that can be implemented with signal propagation in a single direction only. For example, saturated arithmetic cannot be implemented using unidirectional propagation.

When adding or subtracting two numbers, the results of the add or the subtract operation may be a number that is too large (i.e. exceeds the positive or negative range) to be represented in the available number of bits. This is known as overflow if the number is too large (or too positive), and underflow if the number is too small (or too negative).

For some applications, it is acceptable to approximate all numbers that exceed the available range as being the most positive or negative number which can be represented. For example, if 8 bits are available, then numbers from 0 to 255 (unsigned) or -128 to 127 (signed) can be represented.

For example, the operation 100 + 29 has a true result of 129. Although the saturated unsigned result is 129, the saturated signed result is +127. Similarly, the operation 70 - 100 has a true result of -30. In this case, although the saturated signed result is -30, the saturated unsigned result is 0.

In order to use saturated arithmetic, the result of a circuit (e.g. a chain of ALUs) must be "overridden" when the end of a carry-chain of that same circuit detects an overflow (i.e. a carry out).

Known circuits for performing saturated arithmetic operations consist of an arithmetic operation sub-circuit for performing the actual arithmetic operation, an overflow/underflow detection circuit and a correction circuit that replaces the incorrect arithmetic result with the saturation value. In many known architectures, the arithmetic operation sub-circuit comprises a chain of ALUs configured to perform an add (ADD) or a subtract (SUB) operation, the overflow/underflow detection circuit consists of a carry-generating circuit of the chain of ALUs and the correction circuit consists of a chain of multiplexers which override the output of the chain of ALUs when the overflow/underflow detection circuit detects the presence of overflow or underflow.

A problem with these known solutions is that the correction circuit is separate from the chain of ALUs. In the context of a reconfigurable device, this can be cumbersome to implement and will consume valuable routing resources and space. Accordingly, there is a clear need for an ALU with improved saturated arithmetic support.

In order to solve the problems associated with the prior art, the present invention provides a configurable arithmetic processing unit having at least two multi-bit inputs, at least one multi-bit output, a carry input, a carry output and a dynamic instruction signal input, the configurable arithmetic processing unit further comprises:

> a plurality of functional circuits, each having at least one multi-bit input, a multi-bit output and a carry output;
> a first switching means for switching between the carry outputs of the plurality of functional circuits;
> a second switching means for switching between the multi-bit outputs of the plurality of functional circuits, wherein the second switching means is arranged to be independently operable from the first switching means.

Preferably, the first switching means and the second switching means comprise multiplexers.

Preferably, the configurable arithmetic processing unit further comprises:

> a controller arranged to receive a static instruction signal and a dynamic instruction signal and is further arranged, based on the static instruction signal and the dynamic instruction signal, to create a plurality of control signals for controlling the operation of at least one of the functional circuits, the first switching means and the second switching means.

Preferably, the controller is further arranged to generate an override value and the second switching means is arranged to output the override value in response to at least one control signal received from the controller.

Preferably, the override value is a saturation value created in response to the result of one of the functional circuits overflowing.

Preferably, at least one of the functional circuits is arranged to operate as an adder, a logical OR gate, a logical AND gate or a multiplexer.

The present invention also provides an adder circuit for performing multi-bit unsigned saturated arithmetic, the adder circuit comprises:

a plurality of configurable arithmetic processing units in accordance with the above, wherein:

the carry inputs and the carry outputs of the plurality of configurable arithmetic processing units are connected via a carry chain;

the carry output of the last configurable arithmetic unit in the chain is connected to the dynamic instruction signal input of each of the configurable arithmetic processing units in the chain;

at least one of the functional circuits is arranged to operate as a multi-bit adder; and

the second switching means is arranged such that each configurable arithmetic processing unit outputs an override value when the dynamic instruction signal input receives a signal from the carry output of the last configurable arithmetic unit in the chain indicating that the result of the adder circuit has overflowed.

The present invention also provides a circuit for returning the maximum value of a first input and a second input, the circuit comprises:

a plurality of configurable arithmetic processing units in accordance with the above, wherein:

the carry inputs and the carry outputs of the plurality of configurable arithmetic processing units are connected via a carry chain;

the carry output of the last configurable arithmetic unit in the chain is connected to the dynamic instruction signal input of each of the configurable arithmetic processing units in the chain;

a first functional circuit is arranged to subtract the first input from the second input;

a second functional circuit is arranged to output the first input;

a third functional circuit is arranged to output the second input; and

the second switching means is arranged such that each configurable arithmetic processing unit outputs the first input when the result of the subtraction is a positive integer and the second input when the result of the subtraction is a negative integer.

The present invention also provides a circuit for returning the minimum value of a first input and a second input, the circuit comprises:

a plurality of configurable arithmetic processing units in accordance with the above, wherein:

the carry inputs and the carry outputs of the plurality of configurable arithmetic processing units are connected via a carry chain;

the carry output of the last configurable arithmetic unit in the chain is connected to the dynamic instruction signal input of each of the configurable arithmetic processing units in the chain;

a first functional circuits is arranged to subtract the first input from the second input;

a second functional circuit is arranged to output the first input;

a third functional circuit is arranged to output the second input; and

the second switching means is arranged such that each configurable arithmetic processing unit outputs the first input when the result of the subtraction is a negative integer and the second input when the result of the subtraction is a positive integer.

The present invention also provides an adder circuit for performing multi-bit signed saturated arithmetic, the adder circuit comprises:

a plurality of configurable arithmetic processing units in accordance with the above; and

an encoder for receiving a plurality of signals indicative of the sign of the value at the first input of the last configurable arithmetic unit in the chain, the sign of the value at the second input of the last configurable arithmetic unit in the chain, the carry output of the last configurable arithmetic unit in the chain and an operation signal indicative of whether the adder circuit should perform an add or a subtract operation, the encoder being further arranged, based on the plurality of received signals, to generate a dynamic instruction signal input including sign information relating to the sign of the result of the operation performed by the adder circuit, and whether the result of the operation performed by the adder circuit has overflowed, wherein:

the carry inputs and the carry outputs of the plurality of configurable arithmetic processing units are connected via a carry chain;

at least one of the functional circuits is arranged to operate as an multi-bit adder;

the second switching means is arranged such that each configurable arithmetic processing unit outputs an override value when the dynamic instruction signal input receives a signal from the carry output of the last configurable arithmetic unit in the chain indicating that the result of the adder circuit has overflowed, and

the sign of the override value is determined by the sign information included in the dynamic instruction signal input.

As will be appreciated, the present invention provides several advantages over the prior art. For example, because the complexity of the ALU is being increased, its flexibility is also increased and the need for external saturation correction circuits is removed. This results in a smaller overall circuit which will have be less of a burden on the routing network.

Specific examples of the present invention will now be described with reference to the accompanying drawings, in which:

Figure 1 shows a diagram representing an ALU in accordance with the prior art;
Figure 2 shows a diagram representing a chain of ALUs having a saturation correction circuit in accordance with the prior art;
Figure 3 shows a diagram representing a modified ALU in accordance with an embodiment of the present invention;
Figure 4 shows a diagram representing a chain of ALUs in accordance with one embodiment of the present invention;
Figure 5 shows a diagram representing a chain of ALUs in accordance with another embodiment of the present invention; and
Figure 6 shows a logic table representing the inputs and outputs of an encoder in accordance with one embodiment of the present invention.

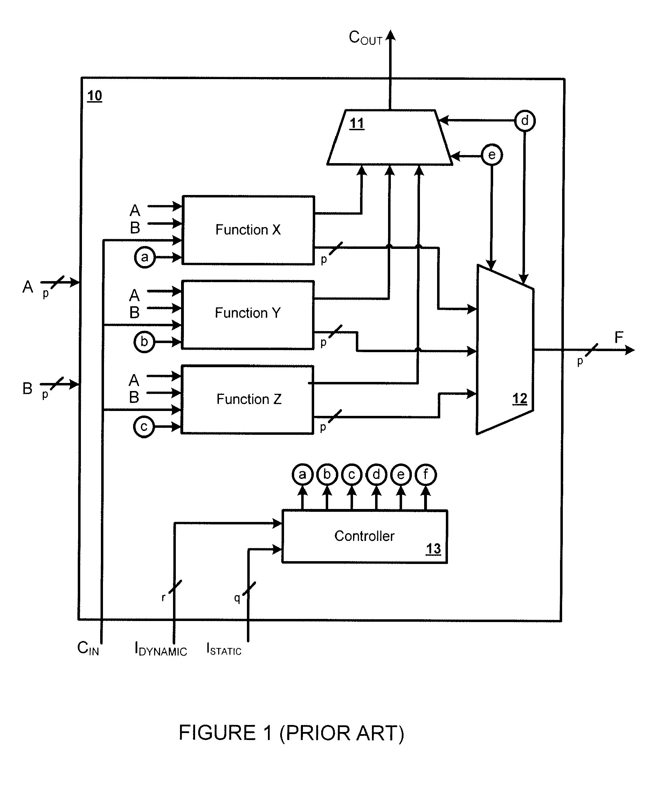

Figure 1 shows an ALU 10 in accordance with the prior art. As will be appreciated, Figure 1 represents a functional diagram of an ALU in accordance with one example of the prior art. Many other ALU configurations are possible. ALU 10 comprises a first input A and a second input B, as well as an output F. Each of the inputs and outputs is p bits wide, where p is a positive integer. ALU 10 also comprises three functional circuits Function X, Function Y and Function Z. Each of these can perform an integer arithmetic operation (e.g. addition and subtraction), a bit-wise logic operation (e.g. AND, OR, NOT), a bit-shifting operation, such as those used in multiplication and division or a selective bypass function emulating that of a multiplexer. In this example, inputs A and B are also input into each functional circuit, though this is not necessarily the case in all ALUs.

A first multiplexer 11 includes three inputs, each input being connected to the carry outputs of Function X, Function Y and Function Z respectively. The output of multiplexer 11 produces a carry out signal, which is sent to the next ALU in a chain or, alternatively, acts as an overflow detection circuit if the ALU 10 is the last in a chain of ALUs. A second multiplexer 12 includes three inputs, each input being connected to the outputs of Function X, Function Y and Function Z respectively, and each being p bits wide. The output of multiplexer 12 is also the output F of the ALU 10.

The ALU 10 also comprises a carry input $C_{IN}$, a dynamic instruction input $I_{DYNAMIC}$, and a static instruction input $I_{STATIC}$. The carry input will typically receive a carry signal from another ALU in a chain of ALUs. In this example, the carry input signal is sent to each of the functional circuits in the ALU. This however is not a requirement of all ALUs.

The ALU 10 also comprises a dynamic instruction input arranged to receive a dynamic instruction signal that is r bits wide, where r is a positive integer. The dynamic instruction input is typically connected to the routing network and the dynamic instruction signal can change during runtime, and can be sourced from other sections if the reconfigurable device itself. The ALU 10 also comprises a static instruction input arranged to receive a static instruction signal which is q bits wide, where q is a positive integer. The static instruction signal is typically connected to a memory unit (not shown), such as a memory cell or a register, which memory unit is normally programmed from outside the device in which the ALU 10 is operating.

A controller 13 receives the dynamic instruction signal and the static instruction signal and generates a plurality of control signals a - f for controlling the various elements of the ALU 10. As will be appreciated by the skilled reader, different control signals can have different widths.

In this example, controller 13 produces control signals a to f. Control signal a is used to control functional circuit Function X, control signal b is used to control functional circuit Function Y and control signal c is used to control functional circuit Function Z. As will be appreciated, any number of the control signals may be used in any number of ways in order to operate the functional circuits Function X, Function Y and Function Z.

Finally, multiplexers 11 and 12 are simultaneously controlled using control signals e and d in order to ensure that the ALU 10 is implementing one of Function X, Function Y or Function Z.

In operation, the multi-bit dynamic instruction signal controls part of the operation of the device. For example, in the case where Function Y is to be implemented in the ALU 10, a multi-bit dynamic instruction signal is received by the controller 13 and is decoded in order to produce the appropriate control signals. In this example, the controller generates an enable signal on control signal b and generates control signals e and d in order to have multiplexers 11 and 12 selected their second input, which are connected to the carry output and the functional output of Function Y, respectively.

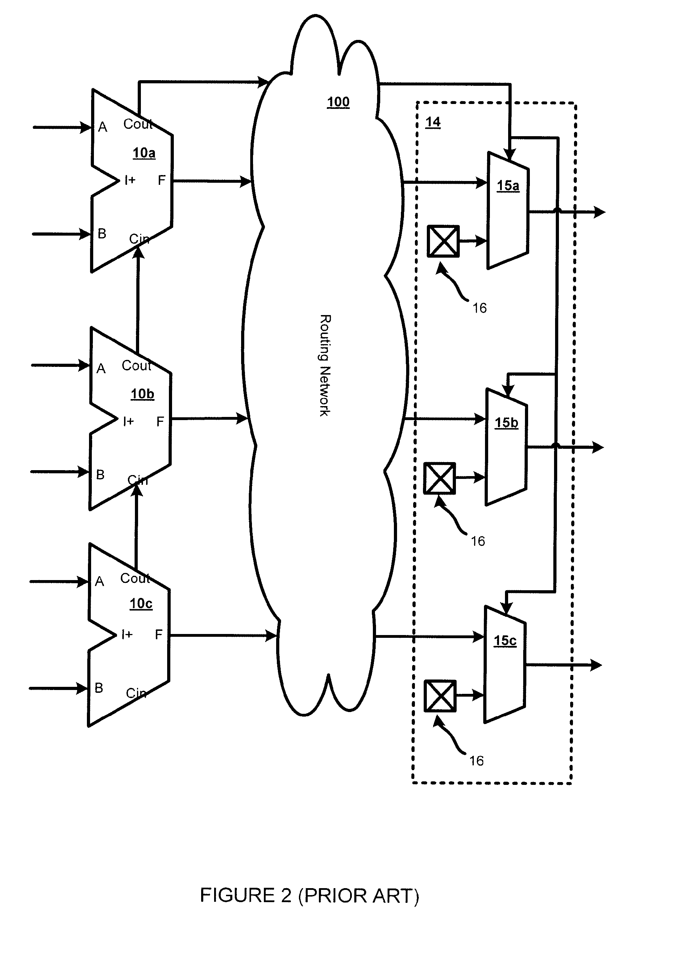

Figure 2 shows a chain of ALUs 10a, 10b, 10c in accordance with the prior art, as well as a correction circuit 14 in accordance with the prior art. In order to perform arithmetic operations on numbers which are greater than p bits wide, the width a single ALU 10, it is necessary to link the ALUs in a chain, as shown in Figure 2. ALU 10b will receive the carry output signal from ALU 10c, ALU 10a will receive the carry output signal from ALU 10b and ALU 10a will generate the saturation signal indicating that the result of the operation has overflowed.

The output F of the ALU 10a is connected, through the routing network, to the input of multiplexer 15a, the output F of the ALU 10b is connected, through the routing network, to the input of multiplexer 15b and the output F of the ALU 10c is connected, through the routing network 100, to the input of multiplexer 15c. The second input of each of multiplexers 15a, 15b and 15c are connected to a memory cell 16, which can be set by any known means. The control of multiplexers 15a, 15b and 15c is effectuated by the carry out signal of ALU 10a, which is routed, through the routing network 100, to the control input of multiplexers 15a, 15b and 15c.

In operation, when a saturated result is achieved (i.e. the carry out signal of ALU 10a is set high), multiplexers 15a, 15b and 15c will be controlled to output the value stored in the memory cells 16. In the case in which the ALUs are implementing unsigned addition and the correction circuit 14 is implementing a saturation circuit, the memory cells will be set HIGH and, when an overflow is detected by the generation of a carry out signal at ALU 10a, the overridden outputs of the ALUs 10a, 10b, 10c (i.e. the output of the multiplexers 15a, 15b and 15c) will be set HIGH, thereby providing a saturated result.

As discussed above, the disadvantage of this type of arrangement is the need to take up space for implementing the correction circuit 14, and the need to take up valuable routing resources in order to route the various signals through the routing network 10.

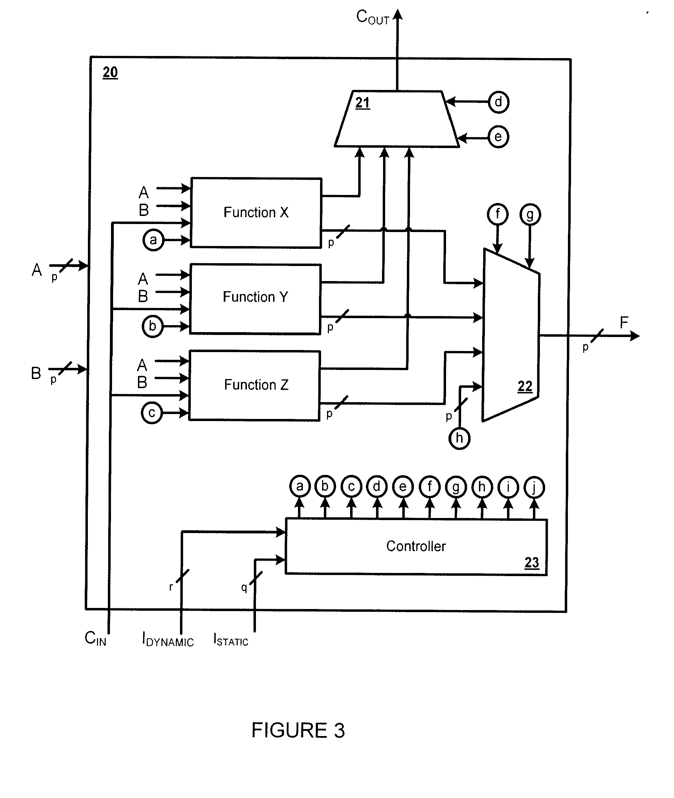

Figure 3 shows an ALU 20 in accordance with one example of the present invention. As will be appreciated, Figure 3 represents a functional diagram of an ALU in accordance with one example of the present invention. ALU 20 comprises a first input A and a second input B, as well as an output F. Each of the inputs and outputs is p bits wide, where p is a positive integer. ALU 20 also comprises three functional circuits Function X, Function Y and Function Z. Each of these can perform an integer arithmetic operation (e.g. addition and subtraction), a bit-wise logic operation (e.g. AND, OR, NOT), a bit-shifting operation, such as those used in multiplication and division, a selective bypass function emulating that of a multiplexer or a simple bypass function passing the inputs of the arithmetic processing unit 20 directly to multiplexer 22. In this example, inputs A and B are also input into each functional circuit, though this is not necessarily the case in all ALUs.

A first multiplexer 21 includes three inputs, each input being connected to the carry outputs of Function X, Function Y and Function Z, respectively. The output of multiplexer 21 produces a carry out signal, which is sent to the next ALU in a chain or, alternatively acts as an overflow detection circuit if the ALU 20 is the last in a chain of ALUs. A second multiplexer 22 includes four inputs, three inputs being connected to the outputs of Function X, Function Y and Function Z respectively, and a fourth input connected directly to a controller 23. Each of the four inputs is p bits wide. The output of multiplexer 22 is also the output F of the ALU 20, and is also p bits wide.

The ALU 20 also comprises a carry input $C_{IN}$, a dynamic instruction input $I_{DYNAMIC}$, and a static instruction input $I_{STATIC}$. The carry input will typically receive a carry signal from another ALU in a chain of ALUs. In this example, the carry input signal is sent to each of the functional circuits in the ALU. This however is not a requirement of all ALUs in accordance with the present invention.

The ALU 20 also comprises a dynamic instruction input arranged to receive a dynamic instruction signal that is r bits wide, where r is a positive integer. The dynamic instruction input is typically connected to the routing network of the device in which the ALU is operating, and the dynamic instruction signal can change during runtime. The ALU 20 also comprises a static instruction input arranged to receive a static instruction signal which is q bits wide, where q is a positive integer. The static instruction signal is typically connected to a memory unit (not shown), such as a memory cell or a register, which memory unit is normally programmed from outside the device in which the ALU 20 is operating.

A controller 23 receives the dynamic instruction signal and the static instruction signal and generates a plurality of control signals a - j for controlling the various elements of the ALU 20. As will be appreciated by the skilled reader, different control signals can have different widths. Also, the controller 23 could be implemented outside the ALU using, for example, the reconfigurable fabric. In such an embodiment, the control signals would be received at the ALU through the dynamic instruction input $I_{DYNAMIC}$, or through any other suitable means.

In this example however, controller 23 produces control signals a to j. Control signal a is used to control functional circuit Function X, control signal b is used to control functional circuit Function Y and control signal c is used to control functional circuit Function Z. Again, as will be appreciated, any number of the control signals may be used in any number of ways in order to operate the functional circuits Function X, Function Y and Function Z. Multiplexer 21 is independently controlled using control signals d and e and multiplexer 22 is independently controlled using control signals f and g.

In the simplest example of how the ALU 20 of the present invention operates, the multi-bit dynamic control signal is received by the controller 23. Based on the information contained in the dynamic control signal, the controller 23 generates control signals d and e in such a way that multiplexer 22 selected control signal has output F. In the simplest form of the invention, the multi-bit dynamic control signal can be a single bit which causes the ALU to select output control signal h, which is also generated by the controller 23.

Another example of how the ALU 20 of the present invention can operate sees a first portion of the multi-bit dynamic instruction signal control part of the operation of the device. For example, in the case where Function Y is to be implemented in the ALU 20, a multi-bit dynamic instruction signal is received by the controller 23 and is decoded in order to produce the appropriate control signals. In this example, the controller generates an enable signal on control signal b and generates control signals e and d in order to have multiplexers 21 and 22 selected their second input, which are connected to the carry output and the functional output of Function Y, respectively.

In accordance with the present invention, a second portion of the multi-bit dynamic instruction signal will be used to signal an overflow condition to the controller. As will be appreciated by the skilled reader, any number of signal arrangements will be possible. For example, a single bit from the dynamic instruction signal can be used to notify the controller 23 of an overflow condition. In such a situation, the controller will generate signal f and g in such a way as to have multiplexer 22 select control signal has an output F. Control signal h is also generated by the controller and is a signal which is p bits wide, p being the same positive integer associated with the width of functional outputs of Function X, Function Y and Function Z. Although in the case of saturation detection the control signal h will be set to a plurality of HIGHs, it will be appreciated that, when the present invention is used in other contexts, as set out below, the control signal h can be set to any given value by the controller.

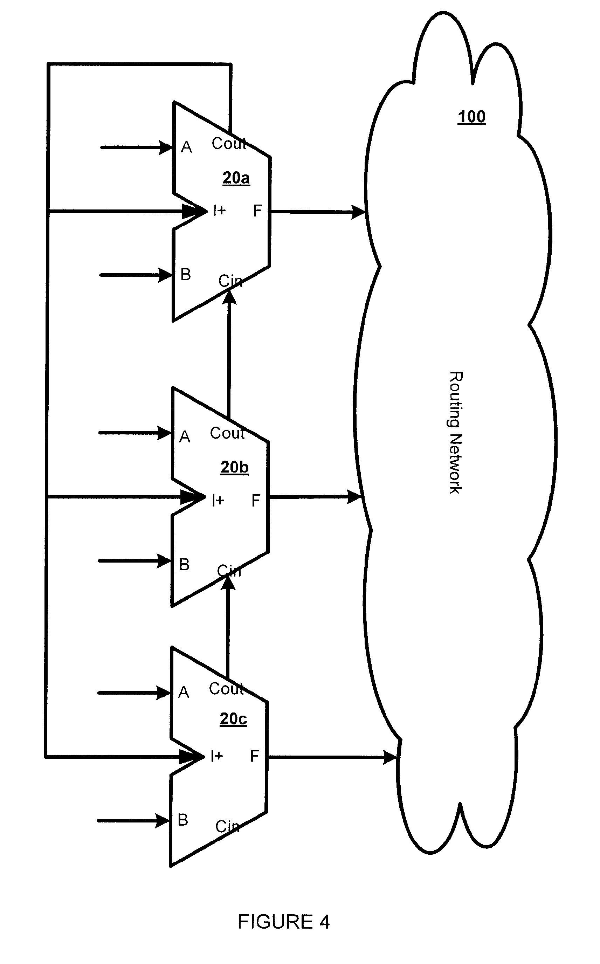

Figure 4 shows a chain of ALUs 20a, 20b, 20c in accordance with the present invention. As will be appreciated, although the examples disclosed herein relate to the particular use of ALUs in a reconfigurable device, the ALU of the present invention can be used in any other context. For example, the ALU of the present invention can be used in a CPU.

As discussed above, in order to perform arithmetic operations on numbers which are greater than p bits wide (the width of a single ALU 20) it is necessary to link the ALUs in a chain, as shown in Figure 4. ALU 20b will receive the carry output signal from ALU 20c, ALU 20a will receive the carry output signal from ALU 20b and ALU 20a will generate the saturation signal indicating that the operation has reached a saturated result.

In the example of Figure 4, the output F of all ALUs 20a, 20b, 20c is connected to the routing network. The carry output signal of the last ALU 20a in the chain can either be directly connected to the dynamic instruction inputs of each ALU in the chain 20a, 20b, 20c or, alternatively, can be used by a circuit in the reconfigurable device to produce a new signal, which new signal would then be sent to the dynamic instruction inputs of each of the ALUs in the chain.

In one example of the operation of the present invention, when a saturated result is achieved (i.e. the carry out signal of ALU 20a is set HIGH), the carry out signal of ALU 20a is sent to the dynamic instruction input of each of the ALUs in the chain 20a, 20b, 20c. The controller 23 of each ALU receives the signal and, as discussed above, the controller will generate signal f and g in such a way as to have multiplexer 22 select control signal has an output F. Control signal h is also generated by the controller and is a signal which is p bits wide, p being the same positive integer associated with the width of the functional outputs of Function X, Function Y and Function Z. Although in the case of saturation detection the control signal h will be set to a plurality of HIGHs.

The ALU 20 of the present invention can also be used in novel ways in order to perform other functions. For example, the ALU 20 of the present invention can be used to perform so called MIN/MAX operations on inputs A and B.

Two binary numbers A and B can be compared to determine which is the larger number by performing a subtract operation (e.g. A - B) and observing whether the result is less than zero. If the result is less than zero, then the subtracted number (B if A - B was used) is the larger. If the result is greater than zero, then the other number is the larger. If the result is zero, the numbers are equal. Accordingly, a MIN(A,B) operation can be defined as returning the smaller of two numbers. For example:

$$MIN(21,5) = 5; MIN(8,8) = 8$$

Similarly, a MAX(A,B) operation can be defined as returning the larger of two numbers. For example:

$$MAX(21,5) = 21; MAX(8,8) = 8$$

With an appropriately configured controller 23, the ALU 20 of the present invention can be used to efficiently implement such MAX/MIN operations as will now be described for the example of a "MIN" operation.

In this example, Function X implements A - B, and if the result of the subtraction is less than zero, its carry out will be set LOW. The controller 23 generates an enable signal on control signal a and generates control signals e and d in order to have multiplexer 21 select its first input which is connected to the carry output of the Function X block. The controller 23 also generates control signals b and c such that the outputs of Function Y and Function Z are connected to the A and B inputs, respectively. The $C_{OUT}$ is connected externally to the ALU to the $I_{DYNAMIC}$ input, as shown in Figure 4. The control signals f and g are derived from the $I_{DYNAMIC}$ signal so as to selectively connect the F output to the Function Y and Function Z outputs, which are connected to A and B as described above. An example of how the $I_{DYNAMIC}$ signal can control the output of F is shown in the table below.

| $I_{DYNAMIC}$ | Selected Function | Output F |
|---|---|---|
| HIGH | FUNCTION Y | B |
| LOW | FUNCTION Z | A |

The overall effect of this configuration is that the F output of the ALU will take on the value of whichever is the smaller number at the A and B inputs. As will be appreciated by the skilled reader, the MAX operation is implemented in a similar fashion, but with the effect of the $I_{DYNAMIC}$ signal on selecting the F output reversed.

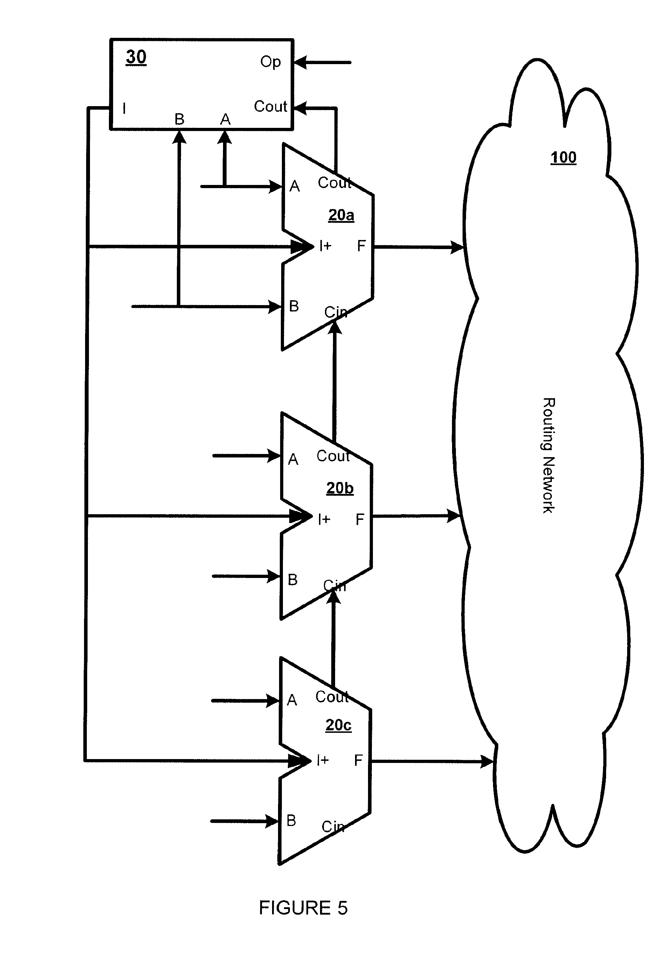

Another example of a novel use of the ALU 20 of the present invention is that of the signed Add/Subtract circuit. In this example, more complex control of the ALU 20 can be achieved using the $I_{DYNAMIC}$ input. The example of the signed Add/Subtract circuit (ADDSUBSAT) will now be described with reference to Figure 5.

The ADDSUBSAT circuit 20a, 20b, 20c, 30 has inputs A and B, which are signed integers, an Op input, which when HIGH denotes that signed addition (B+A) with saturation should be performed and when LOW denotes that signed subtraction (A-B) with saturation should be performed. The circuit also has an output F, which is the saturated result of the signed add or subtract operation.

Determining whether the output should be saturated to the maximum negative number, saturated to the maximum positive number or be the result of the signed operations requires that the sign of the operands (A and B), the type of operation (the value of Op) and the $C_{OUT}$ result be combined into the multi-bit $I_{DYNAMIC}$ signal.

In order to implement the ADDSUBSAT circuit 20a, 20b, 20c, 30 in accordance with the present invention, the $I_{DYNAMIC}$ signal is divided into the following fields:

Op: Denotes whether to perform addition or subtraction.

Saturate: Denotes whether to override the F output with a saturation value.

Sign: Denotes whether the saturation value is positive or negative.

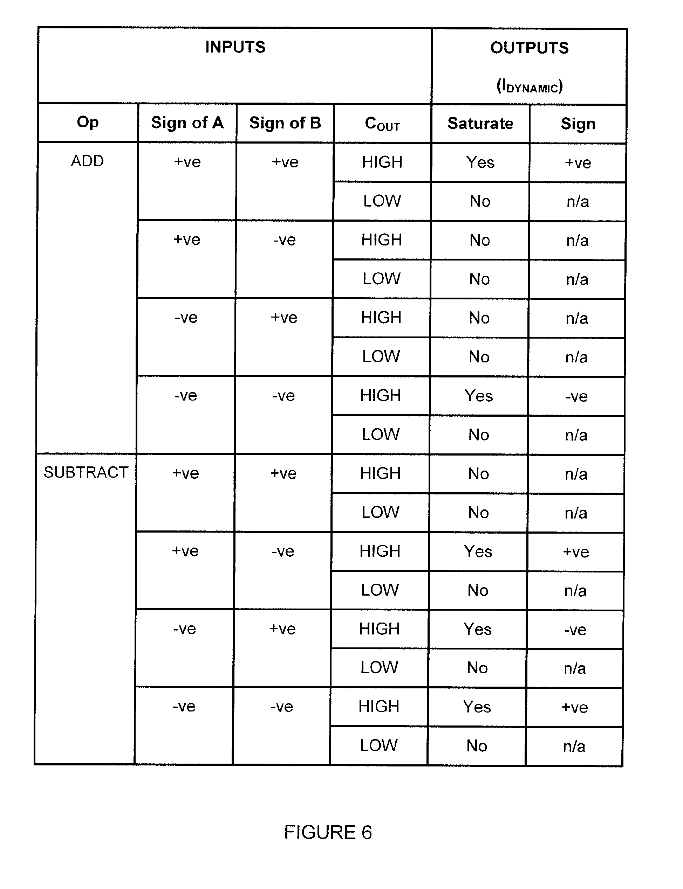

Other resources in the reconfigurable device can be used to create the encoder circuit 30 that derives appropriate values of the $I_{DYNAMIC}$ signal from the sign, Op and $C_{OUT}$ signals. Alternatively, a dedicated encoder could be used. An example of how such an encoder generates the $I_{DYNAMIC}$ signal is shown in the table of Figure 6.

As can be seen from Figure 6, the encoder 30 receives the Op signal, as well as the A and B inputs and $C_{OUT}$ output of the most significant ALU 20a in the chain. Based on these inputs, the encoder 30 produces an $I_{DYNAMIC}$ signal which comprises a first portion containing information which denotes whether the saturation should be applied, a second portion which denotes whether the saturation value is positive or negative and a third portion which denotes whether the chain of ALUs should perform an addition or a subtraction.

As will be appreciated by the skilled reader, the increased flexibility provided by the ALU 20 of the present invention will allow it to be used in a wide variety of novel and inventive ways, only three of which have been described above.

## Claims

1. A configurable arithmetic processing unit (20) having at least two multi-bit inputs (A, B), at least one multi-bit output (F), a carry input ($C_{IN}$), a carry output ($C_{OUT}$) and a dynamic instruction signal input ($I_{DYNAMIC}$), the configurable arithmetic processing unit further comprising:

   a plurality of functional circuits (Function X, Function Y, Function Z), each having at least one multi-bit input, a multi-bit output and a carry output;
   a first switching means (21) for switching between the carry outputs of the plurality of functional circuits;
   a second switching means (22) for switching between the multi-bit outputs of the plurality of functional circuits, wherein the second switching means is arranged to be independently operable from the first switching means.

2. The configurable arithmetic processing unit (20) of claim 1, wherein the first switching means (21) and the second switching means (22) comprise multiplexers.

3. The configurable arithmetic processing unit (20) of any of claims 1 or 2, further comprising:

   a controller (23) arranged to receive a static instruction signal ($I_{STATIC}$) and a dynamic instruction signal ($I_{DYNAMIC}$) and is further arranged, based on the static instruction signal and the dynamic instruction signal, to create a plurality of control signals (a - j) for controlling the operation of at least one of the functional circuits (Function X, Function Y, Function Z), the first switching means (21) and the second switching means (22).

4. The configurable arithmetic processing unit (20) of claim 3, wherein the controller (23) is further arranged to generate an override value (h) and the second switching means (22) is arranged to output the override value in response to at least one control signal received from the controller.

5. The configurable arithmetic processing unit (20) of claim 4, wherein the override value (h) is a saturation value created in response to the result of one of the functional circuits (Function X, Function Y, Function Z) overflowing.

**6.** The configurable arithmetic processing unit (20) of any of the preceding claims, wherein at least one of the functional circuits (Function X, Function Y, Function Z) is arranged to operate as an adder, a logical OR gate, a logical AND gate or a multiplexer.

**7.** An adder circuit for performing multi-bit unsigned saturated arithmetic, the adder circuit comprising:

a plurality of configurable arithmetic processing units (20a, 20b, 20c) in accordance with any of claims 1 to 6, wherein:

the carry inputs and the carry outputs of the plurality of configurable arithmetic processing units (20a, 20b, 20c) are connected via a carry chain;
the carry output of the last configurable arithmetic unit (20a) in the chain is connected to the dynamic instruction signal input ($I_{DYNAMIC}$) of each of the configurable arithmetic processing units (20a, 20b, 20c) in the chain;
at least one of the functional circuits (Function X, Function Y, Function Z) is arranged to operate as a multi-bit adder; and
the second switching means (22) is arranged such that each configurable arithmetic processing unit (20a, 20b, 20c) outputs an override value (h) when the dynamic instruction signal input ($I_{DYNAMIC}$) receives a signal from the carry output of the last configurable arithmetic unit (20a) in the chain indicating that the result of the adder circuit has overflowed.

**8.** A circuit for returning the maximum value of a first input and a second input, the circuit comprising:

a plurality of configurable arithmetic processing units (20a, 20b, 20c) in accordance with any of claims 1 to 6, wherein:

the carry inputs and the carry outputs of the plurality of configurable arithmetic processing units (20a, 20b, 20c) are connected via a carry chain;
the carry output of the last configurable arithmetic unit (20a) in the chain is connected to the dynamic instruction signal input ($I_{DYNAMIC}$) of each of the configurable arithmetic processing units (20a, 20b, 20c) in the chain;
a first functional circuit (Function X, Function Y, Function Z) is arranged to subtract the first input from the second input;
a second functional circuit (Function X, Function Y, Function Z) is arranged to output the first input;
a third functional circuit (Function X, Function Y, Function Z) is arranged to output the second input; and
the second switching means (22) is arranged such that each configurable arithmetic processing unit (20a, 20b, 20c) outputs the first input when the result of the subtraction is a positive integer and the second input when the result of the subtraction is a negative integer.

**9.** A circuit for returning the minimum value of a first input and a second input, the circuit comprising:

a plurality of configurable arithmetic processing units (20a, 20b, 20c) in accordance with any of claims 1 to 6, wherein:

the carry inputs and the carry outputs of the plurality of configurable arithmetic processing units (20a, 20b, 20c) are connected via a carry chain;
the carry output of the last configurable arithmetic unit (20a) in the chain is connected to the dynamic instruction signal input ($I_{DYNAMIC}$) of each of the configurable arithmetic processing units (20a, 20b, 20c) in the chain;
a first functional circuits (Function X, Function Y, Function Z) is arranged to subtract the first input from the second input;
a second functional circuit (Function X, Function Y, Function Z) is arranged to output the first input;
a third functional circuit (Function X, Function Y, Function Z) is arranged to output the second input; and
the second switching means (22) is arranged such that each configurable arithmetic processing unit (20a, 20b, 20c) outputs the first input when the result of the subtraction is a negative integer and the second input when the result of the subtraction is a positive integer.

**10.** An adder circuit for performing multi-bit signed saturated arithmetic, the adder circuit comprising:

a plurality of configurable arithmetic processing units (20a, 20b, 20c) in accordance with any of claims 1 to 6; and
an encoder for receiving a plurality of signals indicative of the sign of the value at the first input of the last configurable arithmetic unit (20a) in the chain, the sign of the value at the second input of the last configurable arithmetic unit (20a) in the chain, the carry output of the last configurable arithmetic unit (20a) in the chain and an operation signal indicative of whether the adder circuit should perform an add or a subtract operation, the encoder being further arranged, based on the plurality of received signals, to generate a dynamic instruction signal input ($I_{DYNAMIC}$) including sign information relating to the sign of the result of the operation performed by the adder circuit, and whether the result of the operation performed by the adder circuit has overflowed, wherein:

the carry inputs and the carry outputs of the plurality of configurable arithmetic processing units (20a, 20b, 20c) are connected via a carry chain;
at least one of the functional circuits (Function X, Function Y, Function Z) is arranged to operate as an multi-bit adder;
the second switching means (22) is arranged such that each configurable arithmetic processing unit (20a, 20b, 20c) outputs an override value (h) when the dynamic instruction signal input ($I_{DYNAMIC}$) receives a signal from the carry output of the last configurable arithmetic unit (20a) in the chain indicating that the result of the adder circuit has overflowed, and
the sign of the override value (h) is determined by the sign information included in the dynamic instruction signal input ($I_{DYNAMIC}$).

FIGURE 1 (PRIOR ART)

FIGURE 2 (PRIOR ART)

FIGURE 3

FIGURE 4

FIGURE 5

| INPUTS | | | | OUTPUTS ($I_{DYNAMIC}$) | |
| --- | --- | --- | --- | --- | --- |
| Op | Sign of A | Sign of B | $C_{OUT}$ | Saturate | Sign |
| ADD | +ve | +ve | HIGH | Yes | +ve |
| | | | LOW | No | n/a |
| | +ve | -ve | HIGH | No | n/a |
| | | | LOW | No | n/a |
| | -ve | +ve | HIGH | No | n/a |
| | | | LOW | No | n/a |
| | -ve | -ve | HIGH | Yes | -ve |
| | | | LOW | No | n/a |
| SUBTRACT | +ve | +ve | HIGH | No | n/a |
| | | | LOW | No | n/a |
| | +ve | -ve | HIGH | Yes | +ve |
| | | | LOW | No | n/a |
| | -ve | +ve | HIGH | Yes | -ve |
| | | | LOW | No | n/a |
| | -ve | -ve | HIGH | Yes | +ve |
| | | | LOW | No | n/a |

FIGURE 6

Europäisches
Patentamt

European
Patent Office

Office européen
des brevets

# EUROPEAN SEARCH REPORT

**Application Number**

EP 09 17 9109

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2003/182346 A1 (MIRSKY ETHAN A [US]) 25 September 2003 (2003-09-25) * figures 3,4,8,12,14 * * paragraphs [0049], [0052], [0054], [0064], [0069], [0071], [0073], [0074] - [0075] * ----- | 1-10 | INV. G06F15/78 G06F7/575 |
| A | US 2006/004994 A1 (URIU SHIRO [JP] ET AL) 5 January 2006 (2006-01-05) * figures 1,3,8 * * paragraphs [0037] - [0040], [0045] * ----- | 1-10 | |

| | TECHNICAL FIELDS SEARCHED (IPC) |
|---|---|
| | G07F G06F |

The present search report has been drawn up for all claims

| Place of search | Date of completion of the search | Examiner |
|---|---|---|
| The Hague | 16 September 2010 | Bosch Vivancos, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 09 17 9109

This annex lists the patent family members relating to the patent documents cited in the above-mentioned European search report.
The members are as contained in the European Patent Office EDP file on
The European Patent Office is in no way liable for these particulars which are merely given for the purpose of information.

16-09-2010

| Patent document cited in search report | Publication date | Patent family member(s) | Publication date |
|---|---|---|---|
| US 2003182346 A1 | 25-09-2003 | NONE | |
| US 2006004994 A1 | 05-01-2006 | CN 1716228 A | 04-01-2006 |
| | | EP 1612694 A1 | 04-01-2006 |
| | | JP 2006018411 A | 19-01-2006 |

EPO FORM P0459

For more details about this annex : see Official Journal of the European Patent Office, No. 12/82

**EP 2 333 674 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6353841 B
- US 6252792 B

- US 20020157066 A